# EUROPÄISCHE PATENTSCHRIFT

(11) **EP 3 270 028 B1**
(45) Veröffentlichungstag und Bekanntmachung des Hinweises auf die Patenterteilung: **20.03.2019**
(21) Anmeldenummer: 17171767.1
(22) Anmeldetag: 18.05.2017
(51) Int. Cl.: F16L 37/098, F16L 37/12, F16L 37/14, F16L 37/088

(54) **KUPPLUNGSTEIL FÜR EINEN STECKVERBINDER ZUR HERSTELLUNG VON SCHLAUCH- UND/ODER ROHRVERBINDUNGEN UND STECKVERBINDER MIT EINEM DERARTIGEN KUPPLUNGSTEIL**
COUPLING PART FOR A PLUG CONNECTOR FOR MAKING TUBE AND/OR PIPE CONNECTIONS AND PLUG CONNECTOR HAVING SUCH A COUPLING PART
PARTIE D'ACCOUPLEMENT DE CONNECTEUR POUR LA FABRICATION DE RACCORDS TUBULAIRES ET/OU DE TUYAU ET CONNECTEUR COMPRENANT UNE TELLE PARTIE D'ACCOUPLEMENT

(30) Priorität: 20.06.2016 DE 102016111194
(43) Veröffentlichungstag der Anmeldung: 17.01.2018
(73) Patentinhaber: Voss Automotive GmbH, 51688 Wipperfürth (DE)
(72) Erfinder: OBERDÖRFER, Alexander, 42477 Radevormwald (DE); RÖHRIG, Lukas, 51709 Marienheide (DE); HEINRICHS, Eugen, 51702 Bergneustadt (DE); HESS, Jochem-Andreas, 51688 Wipperfürth (DE)
(74) Vertreter: Patent- und Rechtsanwälte Dr. Solf & Zapf

(56) Entgegenhaltungen:
- EP-A1- 2 251 581
- EP-A2- 2 728 236
- WO-A1-2014/171331
- DE-A1- 19 722 842
- DE-A1-102004 052 475
- DE-A1-102014 007 409
- US-A1- 2010 290 764

## Beschreibung

Die Erfindung betrifft ein Kupplungsteil für einen Steckverbinder zur Herstellung von Schlauch- und/oder Rohrverbindungen gemäß dem Oberbegriff des Anspruchs 1.

Unter dem Namen "VOSS Stecksystem 241" sind auf dem Markt befindliche, gerade und gewinkelte Steckverbinder bekannt, bei denen nach einem - im Rahmen einer Vormontage erfolgenden - Einstecken eines als Halteklammer ausgebildeten Halteteils in ein Kupplungsteil durch ein anschließendes Zusammenstecken des Kupplungsteils mit einem Steckerteil eine Verbindung hergestellt werden kann. Bei dem Steckerteil kann es sich dabei insbesondere um einen nach der Norm SAE J 2044 ausgebildeten sogenannten Male-Stecker handeln. Dabei greift die Halteklammer hinter einen in der SAE-Steckerkontur ausgebildeten Bund. Das genannte Stecksystem findet Anwendung im Automobilbau, und zwar insbesondere in Kraftstoffsystemen sowie in beheizten und unbeheizten SCR-Systemen. SCR steht dabei für "Selective catalytic reduction" und bezeichnet eine Technik zur Reduktion von Stickoxiden in Abgasen. In der Fahrzeugtechnik wird das SCR-Verfahren seit seiner Einführung im Jahr 2004 angewendet, um bei Dieselfahrzeugen die Stickoxidemissionen zu senken. Mit Hilfe dieser Technik können Nutzfahrzeuge die Euro-5-Norm und PKW die sehr strenge amerikanische BIN5-Norm sowie die Euro-6-Norm erfüllen. In den Leitungen von SCR-Systemen wird in der Regel eine 32,5-prozentige, wässrige Harnstofflösung geführt, die in der Industrie einheitlich mit AdBlue bezeichnet wird. Die Zusammensetzung ist in der DIN 70070 bzw. ISO 22241-1 geregelt. Diese wässrige Lösung wird vor dem SCR-Katalysator in den Abgasstrang, z. B. mittels Dosierpumpe oder Injektor, eingespritzt. Es ist bekannt, dass dieses Medium bei Temperaturen im Bereich von - 8 °C bis - 11 °C gefriert und sich dabei ausdehnt. Dies kann bei unzureichender Elastizität bzw. Festigkeit zu einem Versagen des Stecksystems führen.

Das Kupplungsteil dieses bekannten Steckverbinders umfasst einen als Muffenteil ausgebildeten Grundkörper und einen, insbesondere von der Grundgestalt her ringförmigen, Aufnahmekörper für die Halteklammer, die vorzugsweise einstückig ausgeführt sind, aber auch zweiteilig ausgeführt sein können, wobei sie insbesondere über eine stoffschlüssige Verbindung, wie durch eine Laserschweißung, miteinander verbindbar bzw. im Montagezustand miteinander verbunden sind. Es wären aber auch kraft- und/oder formschlüssige Verbindungen möglich. Insofern ist die Verbindung zwischen Grundkörper und Aufnahmekörper eine andere als die eingangs genannte. Sowohl die Halteklammer als auch die Teile des Kupplungsteils können bevorzugt in fertigungstechnisch einfacher Ausführung als aus Kunststoff bestehende Spritzguss-Formteile ausgebildet sein.

Ein ähnliches Kupplungsteil, wie das der eingangs genannten Art, ist auch aus der EP 2 318 747 B1 bekannt. In diesem Kupplungsteil sind ein Grundkörper und ein Aufnahmekörper für ein Stecker-Halteteil formschlüssig über eine irreversible Bajonettverbindung verbindbar, wobei ein zusätzliches bewegliches Wandelement eingesetzt wird, welches mit am Grundkörper und am Aufnahmekörper befindlichen Befestigungselementen zusammenwirkt. Die Irreversibilität der Verbindung und das zusätzliche Wandelement lassen diese bekannte Gestaltung unter montage- und fertigungstechnischen Gesichtspunkten als nachteilig erscheinen.

Ein weiteres Kupplungsteil ist aus der EP 2 728 236 A2 bekannt. Dieses zweiteilige Kupplungsteil weist ein Kopfteil und ein Dichtungsteil auf. Im montierten Zustand wird das Kopfteil in das Dichtungsteil gesteckt und bildet mit diesem eine Durchgangsbohrung. Zum Verbinden einer Leitung wird diese mit einem Steckelement in die Durchgangsbohrung eingeführt und mit einem ringförmigen Halter fixiert, indem dieser mit Halteelementen durch Aussparungen im Kopfteil in die Durchgangsbohrung greift und mit einer, auf dem Steckelement angeordneten Stauchung zusammenwirkt.

Des Weiteren ist ein Kupplungsteil der eingangs genannten Art aus der EP 2 570 710 A1 bekannt. Der Grundkörper dieses Kupplungsteils ist durch ein rohrförmiges Metallgehäuse gebildet, das mit einer Kunststoffhülse als Aufnahmekörper für Stecker-Verbindungsmittel zusammengefügt werden kann. Die Verbindung wird als Rastverbindung hergestellt. Dazu ist der Aufnahmekörper mehrteilig ausgebildet. Er umfasst ein Aufnahmesegment für das Halteteil, also für die Stecker-Verbindungsmittel, und ein am Aufnahmesegment gehaltenes Ringsegment, welches - als dem Aufnahmekörper zugeordnete Rastelemente - Widerhaken aufweist, die zur Verbindungsherstellung in Schlitze - als komplementär ausgebildete Rastelemente des metallischen Grundkörpers - eingreifen können. Da der metallische Grundkörper einerseits im Sinne einer hohen Stabilität des Kupplungsteils notwendig erscheint, andererseits aber im Hinblick auf den Leitungsanschluss gewisse Nachteile aufweist, sieht die EP 2 570 710 A1 vor, einen Endabschnitt des Metallgehäuses noch zusätzlich mit einem Kunststoffgehäuseteil zu umformen. Auch diese bekannte Kupplungsausführung erscheint unter montage- und fertigungstechnischen Gesichtspunkten aufwändig und daher nachteilig.

Eine ähnliche Kupplung ist aus der DE 10 2004 052 475 A1 bekannt. Diese Kupplung umfasst eine Kupplungsbuchse, ein Kupplungsgehäuse und einen Kupplungsstecker, wobei die Kupplungsbuchse und der Kupplungsstecker durch Kaltumformung an den Enden der zu verbindenden Rohrleitungen selbst geformt werden. Das Kupplungsgehäuse weist zum Verkuppeln der Leitungen Rastelemente auf, die hinter einem Vorsprung des, durch Kaltumformung, nach innengeborgenen Randes eingreifen. Der Kupplungsstecker ist mittels eines Sicherungsrings in dem Kupplungsgehäuse gesichert, wobei es zum Trennen der Verbindung eines Lösewerkzeuges bedarf.

Der Erfindung liegt die Aufgabe zugrunde, in wenig aufwändiger Weise ein Kupplungsteil der eingangs genannten Art zur Verfügung zu stellen, das sich durch eine hohe Stabilität, Funktionalität und einfache Montageweise auszeichnet. Gleiches soll erfindungsgemäß auch für einen Steckverbinder der eingangs genannten Art erreicht werden. Insbesondere soll das erfindungsgemäße Kupplungsteil dabei eine erhöhte Widerstandsfähigkeit für den Fall aufweisen, dass ein flüssiges Medium den Gefrierpunkt unterschreitet und dadurch eine Volumenausdehnung und ein erhöhter Eisdruck auftreten.

Die Aufgabe wird erfindungsgemäß durch die Merkmale des Anspruchs 1 gelöst. Demnach ist vorgesehen, dass an dem in den Grundkörper einsteckbaren Verbindungsansatz des Aufnahmekörpers frei ragende, radial federelastische, axial gerichtete Rastarme ausgebildet sind, welche die radial nach außen weisenden Rastelemente des Aufnahmekörpers tragen, und sich auf der Außenseite der Rastarme (51) Stützrippen (53) befinden, deren radiale Höhe klein gegenüber der radialen Größe der Rastelemente (52) ist, wobei der Grundkörper und der Aufnahmekörper jeweils einstückig aus Kunststoff geformt sind.

In fertigungstechnisch einfacher Weise können der Grundkörper und der Aufnahmekörper dabei mit Vorteil Spritzguss-Formteile sein, die aus - zur Stabilitätserhöhung insbesondere faserverstärktem - Kunststoff bestehen.

Je nach der erwünschten Festigkeit der Verbindung zwischen den Bestandteilen des erfindungsgemäßen Kupplungsteils kann die Anzahl der Rastarme des Aufnahmekörpers variieren. So können an dem Verbindungsansatz mit Vorteil zwei, umfangsgemäß um 180° gegeneinander versetzte, drei, umfangsgemäß um 120° gegeneinander versetzte, oder insbesondere vier, umfangsgemäß um 90°, gegeneinander versetzte, axial gerichtete Rastarme ausgebildet sein. Je mehr Rastarme vorhanden sind, desto weniger Kraft wird im Belastungsfall von einem einzelnen Rastarm übertragen.

Die frei ragenden, radial federelastischen, axial gerichteten Rastarme können zur Montage des erfindungsgemäßen Kupplungsteils in einfacher Weise zusammengedrückt werden, um den Aufnahmekörper zur Montage in den Grundkörper einzuführen. Die radial nach außen weisenden Rastelemente des Aufnahmekörpers können dazu bevorzugt an den axial gerichteten Rastarmen radial außenliegende, in Einsteckrichtung des Verbindungsansatzes konvergierende Einführ-Schrägflächen aufweisen, was die Montage erleichtert. In komplementärer Weise können sich in dem Grundkörper an dessen Innenwandung axial gerichtete Führungsbahnen für die Rastarme des Aufnahmekörpers befinden. Die radial nach außen weisenden Rastelemente des Aufnahmekörpers verrasten dann mit den komplementär ausgebildeten Rastelementen des Grundkörpers, bei denen es sich bevorzugt um fensterartige Durchbrüche in der Wandung des Grundkörpers handeln kann, und bilden durch einen gegenseitigen Eingriff eine Rastverbindung zwischen Aufnahmekörper und Grundkörper aus. Aufgrund der radialen Federelastizität der Rastarme, zwischen denen sich Schlitze mit - insbesondere entsprechend den Anforderungen des Betriebszustandes, vorzugsweise des Zustands von möglichen extremalen Belastungssituationen, wie einem Gefrieren des Fluids im Durchflusskanal, - dimensionierbarer Breite befinden können, weist das erfindungsgemäße Kupplungsteil mit Vorteil eine hohe Beständigkeit gegen Eisdruck auf. Einer möglichen Volumenvergrößerung, die mit dem Gefrieren eines Fluids verbunden ist, tritt das erfindungsgemäße Kupplungsteil seinerseits mit einer - beim Auftauen elastisch reversiblen - Volumenvergrößerung entgegen, wodurch der Eisdruck im Kupplungsteil minimiert wird. In diesem Zusammenhang ist darauf hinzuweisen, dass bei Kunststoffen viel früher als bei Metallen eine plastische irreversible Verformung einsetzt. Das bedeutet, dass schon bei geringer Dehnung auch eine geringe plastische Verformung entsteht, die bei niedrigen Temperaturen kleiner ist als bei hohen Temperaturen.

Was die möglichen extremalen Belastungssituationen betrifft, so werden in Systemen mit dem erfindungsgemäßen Kupplungsteil hohe, sich aus den Beanspruchungsbedingungen ergebende Anforderungen gestellt. Diese Anforderungen betreffen insbesondere das mögliche Auftreten hoher Temperaturen, die an bestimmten Stellen des Systems, z. B. im Bereich von 140 °C bis 180 °C, kurzzeitig sogar im Bereich bis zu 200 °C, liegen können. Des Weiteren ist mit dem Auftreten hoher absoluter Drücke zu rechnen, die standardmäßig im Bereich von 5 bar bis 10 bar, teilweise auch im Bereich bis zu 15 bar, liegen. Es können Druckpulsationen auftreten, die kompensiert werden müssen, sowie auch Volumenänderungen, die mit dem Gefrieren bei Frost und dem Wiederauftauen des Fluids verbunden sind. Ein erfindungsgemäßer Steckverbinder, der das erfindungsgemäße Kupplungsteil aufweist, ist diesen Anforderungen gewachsen.

In dem Kupplungsteil, insbesondere in dessen Grundkörper, kann - wie an sich bekannt - ein Dichtungspaket angeordnet sein, welches zwei Dichtungsringe, insbesondere elastomere O-Ringe, und dazwischen einen Abstandsring umfasst. Vorzugsweise kann dieses Dichtungspaket durch einen Stützring auf der Seite des Aufnahmeteils, insbesondere durch einen axial am Verbindungsansatz des Aufnahmeteils anliegenden Stützring, komplettiert werden. Durch den Ring, der wie der Abstandsring aus einem festeren, nicht wie die O-Ringe deformierbaren Material besteht, wird einer Spaltextrusion der elastomeren O-Ringe entgegengewirkt.

Der Grundkörper des Kupplungsteils kann dabei als Verbinderstück ausgebildet sein, das einen Anschlussabschnitt zur Anschlussverbindung mit einer Fluidleitung aufweist und das, um eine Beheizung des Fluids zu ermöglichen, einen Heizabschnitt aufweist, in dem elektrische Heizmittel in einer das Kupplungsteil zumindest teilweise umschließenden Anordnung vorgesehen werden können. Die elektrischen Heizmittel, insbesondere Heizleiter, können dabei außen auf den Grundkörper des Kupplungsteils aufgebracht werden, wozu auf dem Außenumfang des Grundkörpers Führungselemente, insbesondere wendelförmige Führungselemente angeordnet bzw. ausgebildet sein können.

In einem erfindungsgemäßen Steckverbinder bevorzugter Ausführung kann das Kupplungsteil, insbesondere durch seinen Aufnahmekörper für die Halteklammer, ein - von der Grundgestalt her hohlzylindrisches, an den jeweiligen Stirnwänden des Hohlzylinders jeweils geschlossenes - Gehäuse für die Halteklammer bilden, welches auf zwei einander diametral gegenüber liegenden Seiten umfangsgemäße Öffnungen zur Durchführung der Halteklammer aufweist. Die Halteklammer ist dadurch vorteilhafterweise im Montagezustand von dem Gehäuse sowohl in axialer, als auch in radialer Richtung zumindest bereichsweise umfasst und damit gegen äußere Einwirkungen geschützt sowie vorteilhafterweise auch gegen die Möglichkeit einer Spontanöffnung gesichert. Die umfangsgemäßen Öffnungen im Kupplungsteil gewährleisten jedoch die Montage- und Demontagemöglichkeit der Halteklammer, indem sie eine geführte radiale Verschieblichkeit der Halteklammer zulassen bzw. ermöglichen.

Auch das Halteteil zur Fixierung des Steckers kann in fertigungstechnisch einfacher Ausführung einstückig als Halteklammer, insbesondere mit Vorteil als ein aus Kunststoff bestehendes Spritzguss-Formteil, ausgebildet sein, wobei sie von der Grundgestalt her - in Richtung der Längsachse gesehen - insbesondere U-förmig ausgebildet ist und ein Paar oder zwei Paare von einander diametral gegenüber liegenden rastend wirkenden Federarmen aufweisen kann. Die Federarme dienen zur Erfüllung der Hauptfunktion der Verbindungsherstellung, also als Rastarme zum radialen Verrasten des Steckerteils, und zur Erfüllung der Nebenfunktion der Verriegelung der Halteklammer im erfindungsgemäßen Kupplungsteil in einer Einführposition und in einer Halteposition.

In einem erfindungsgemäßen Steckverbinder, der sich durch die Präsenz eines erfindungsgemäßen Kupplungsteils auszeichnet, trifft beim Stecken des Steckerteils dessen Steckerteil-Bund zunächst auf Schrägflächen der Federarme der Halteklammer, wobei dann durch ein Abgleiten des Bundes auf den Schrägflächen die Halteklammer radial - also die Federarme eines Paares gegeneinander nach außen - aufgeweitet wird bzw. werden und das Steckerteil hinter den vorderen Federarmen, welche die Schrägflächen aufweisen, einrasten kann.

Weitere vorteilhafte Ausgestaltungen der Erfindung ergeben sich aus der folgenden Figurenbeschreibung und den abhängigen Unteransprüchen.

Es zeigen:
- Fig. 1: eine dreidimensionale Explosionsdarstellung einer Ausführungsform eines erfindungsgemäßen Steckverbinders mit einer Ausführungsform eines erfindungsgemäßen Kupplungsteil,
- Fig. 2: einen Axialschnitt des in Fig. 1 dargestellten erfindungsgemäßen Steckverbinders in vergrößerter Darstellung mit eingestecktem Steckerteil,
- Fig. 3: eine Vorderansicht einer Ausführung eines Aufnahmekörpers eines erfindungsgemäßen Kupplungsteils,
- Fig. 4: eine Stirnansicht des Aufnahmekörpers des erfindungsgemäßen Kupplungsteils gemäß Fig. 3,
- Fig. 5: einen Axialschnitt durch einen Grundkörper eines erfindungsgemäßen Kupplungsteils,
- Fig. 6: eine vergrößerte Schnittdarstellung eines erfindungsgemäßen Kupplungsteils im Bereich der in Fig. 2 mit VI bezeichneten Einzelheit, ohne Steckerteil, Halteklammer und Dichtungspaket,
- Fig. 7 und 8: jeweils in Darstellungen wie in Fig. 6, zwei weitere Ausführungsformen eines erfindungsgemäßen Kupplungsteils.

In den verschiedenen Figuren der Zeichnung sind gleiche Teile stets mit denselben Bezugszeichen versehen und werden daher in der Regel nachfolgend nur einmal beschrieben.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal der Ausführungsbeispiele auch losgelöst von allen anderen im Zusammenhang damit beschriebenen Teilmerkmalen für sich von Bedeutung für den Gegenstand der Erfindung.

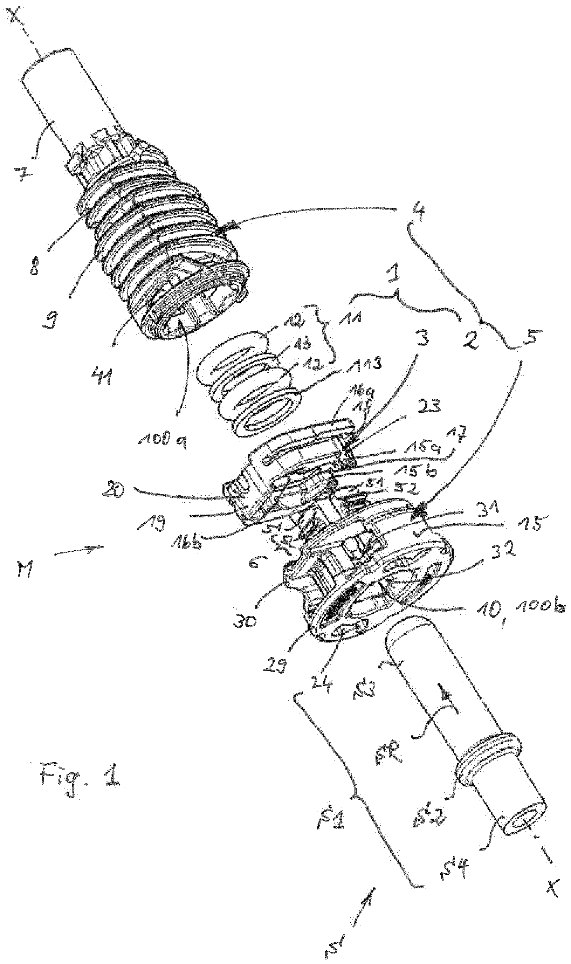

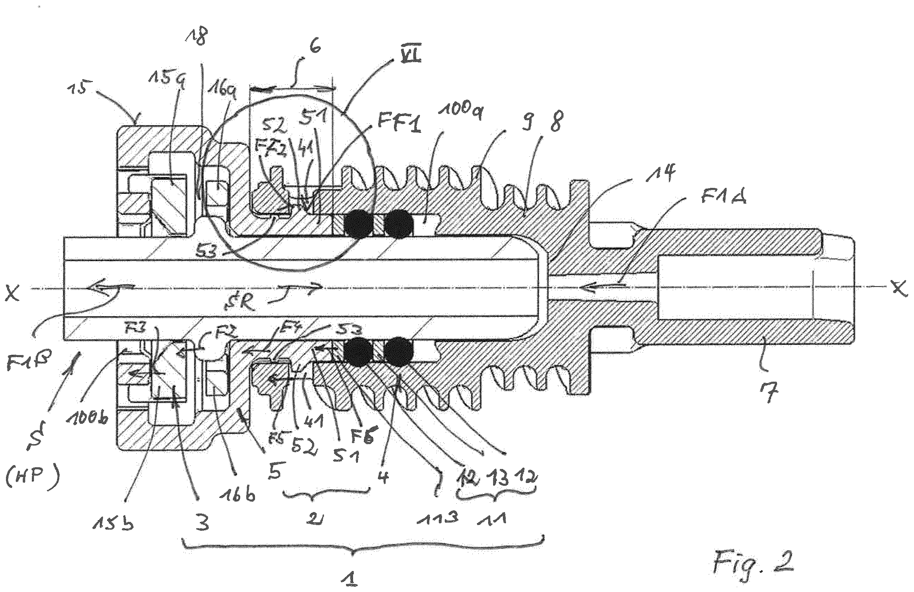

Fig. 1 zeigt eine Explosionsdarstellung einer vorteilhaften Ausführungsform eines erfindungsgemäßen Steckverbinders 1 zum Verbinden eines als Rohrstutzen ausgebildeten Steckerteils S, insbesondere eines SAE J 2044 Male-Steckers. Ein derartiger erfindungsgemäßer Steckverbinder 1 ist im Endmontagezustand - also zusammen mit dem gesteckten Stecker S - auch in Fig. 2 gezeigt.

Wie Fig. 1 und 2 zeigen, weist das Steckerteil S einen Einsteckabschnitt S1 auf, an dessen Außenumfang ein umlaufender Bund S2 angeordnet ist. Das Steckerteil S ist hohlzylinderförmig ausgebildet. Der Bund S2 teilt den Einsteckabschnitt S1 in einen Dichtungsabschnitt S3 und einen Verriegelungsabschnitt S4, wobei der Dichtungsabschnitt S3 axial (Längsachse X-X) in Einsteckrichtung SR vor dem Verriegelungsabschnitt S4 angeordnet ist. Auf dem Dichtungsabschnitt S3 sitzt nach dem Stecken des Steckers S ein Dichtungspaket 11, wie dies beispielsweise Fig. 2 zeigt.

Der erfindungsgemäße Steckverbinder 1 umfasst ein erfindungsgemäßes Kupplungsteil 2 und eine zumindest bereichsweise federelastische Halteklammer 3 als Halteteil. Insbesondere kann die Halteklammer 3 am Kupplungsteil 2 vormontierbar sein und in einer Vormontage-Stellung eine nicht dargestellte Einführposition für das Steckerteil S einnehmen, in der das Steckerteil S durch die Halteklammer 3 in die Aufnahmeöffnung 10 einführbar ist, und - wie in Fig. 2 dargestellt - in einer Montage-Stellung eine Halteposition HP für das eingesteckte Steckerteil S einnehmen, in der das Steckerteil S mit seinem Bund S2 in der Aufnahmeöffnung 10 und in den axial gerichteten Einsteckkanälen 100a, 100b mittels der Halteklammer 3 formschlüssig gegen ein Herausziehen blockierbar ist.

Das Kupplungsteil 2 bildet, insbesondere durch seinen Aufnahmekörper 5 für die Halteklammer 3, ein von der Grundgestalt her hohlzylindrisches, an den jeweiligen Stirnwänden 29, 30 des Hohlzylinders jeweils geschlossenes Gehäuse für die Halteklammer 3, wobei das Gehäuse auf zwei einander diametral gegenüber liegenden Seiten umfangsgemäße Öffnungen 31, 32 zum Durchgriff der Halteklammer 3, insbesondere eine Einführöffnung 31 und eine Austrittsöffnung 32, aufweist.

Auf der der Einführrichtung des Steckerteils S zugewandten Stirnwand 29 des Kupplungsteils 2 können sich Führungsschlitze 24 zum Eingriff von an den vorderen Federarmen 15a, 15b der Halteklammer 3 befindlichen komplementären Führungszapfen 23 befinden. Die Führungsschlitze 24 sind jeweils Langlöcher mit Knickwinkeln. Dadurch ist in den Führungsschlitzen 24 jeweils eine Steuerkontur ausgebildet, durch die im Zusammenwirken mit den komplementären Führungszapfen 23 einerseits eine Einführbewegung und eine Ausschubbewegung der Halteklammer 3 quer zur Steckrichtung SR des Steckerteils S begrenzt werden kann, und andererseits bei einer Bewegung der Halteklammer 3 quer zur Steckrichtung SR des Steckerteils S eine radiale Auswärtsbewegung oder eine radiale Einwärtsbewegung der Federarme 15a, 15b bewirkt werden kann, an denen sich die Führungszapfen 23a, 23b befinden.

Das Kupplungsteil 2 hat einen, insbesondere als Muffenteil ausgebildeten, Grundkörper 4 und einen, insbesondere von der Grundgestalt her ringförmigen, Aufnahmekörper 5 für die Halteklammer 3, die, vorzugsweise über eine erfindungsgemäß gestaltete Rastverbindung miteinander verbindbar (Fig. 1) bzw. verbunden (Fig. 2) sind. Am Aufnahmekörper 5 ist zu diesem Zweck ein Verbindungsansatz 6 vorgesehen.

Der Grundkörper 4 und der Aufnahmekörper 5 sind jeweils einstückig aus Kunststoff geformt. Der Grundkörper 4 und/oder der Aufnahmekörper 5 können mit Vorteil als aus Kunststoff bestehende Spritzguss-Formteile ausgeführt sein.

Ebenso ist in der dargestellten Ausführung auch die Halteklammer 3 einstückig, insbesondere als ein aus Kunststoff bestehendes Spritzguss-Formteil, ausgebildet.

Das Kupplungsteil 2 kann einseitig insbesondere mit einer nicht dargestellten Fluidleitung verbunden werden. Zu diesem Zweck ist am Grundkörper 4 ein Anschlussabschnitt 7 ausgebildet. Eine anzuschließende Medienleitung kann insbesondere als Schlauch oder Rohr ausgebildet sein. Es kann vorgesehen sein, dass die Fluidleitung form- und/oder kraftschlüssig oder auch stoffschlüssig angebunden wird.

Der Grundkörper 4 des Kupplungsteils 2 ist dabei, um eine Beheizung zu ermöglichen, als Verbinderstück ausgebildet, das den Anschlussabschnitt 7 zur Anschlussverbindung der Fluidleitung und einen Heizabschnitt 8 aufweist, in dem - nicht dargestellte - elektrische Heizmittel in einer das Kupplungsteil 2, insbesondere dessen Grundkörper 4, zumindest teilweise umschließenden Anordnung vorgesehen werden können. Die elektrischen Heizmittel, insbesondere Heizleiter, können dabei außen auf das Kupplungsteil 2 aufgebracht werden, wozu auf dem Mantel, insbesondere des Grundkörpers 4, im Bereich des Heizabschnitts 8 des Kupplungsteils 2 Führungselemente 9, insbesondere wendelförmige Führungselemente 9 angeordnet bzw. ausgebildet sind.
Auf der dem Anschlussabschnitt 7 für die Medienleitung gegenüberliegenden Seite weist das Kupplungsteil 2 eine Aufnahmeöffnung 10 zum Einstecken des Steckerteils S auf. Diese ist Teil eines axial gerichteten Einsteckkanals 100b des Aufnahmekörpers 5, der insbesondere der Aufnahme des Steckerteil S dient. Einen entsprechenden in axialer Richtung weiter führenden Einsteckkanal 100a weist auch der Grundkörper 4 auf.

Zur Abdichtung der Steckverbindung ist in dem Kupplungsteil 2, und zwar in dessen Grundkörper 4, ein Dichtungspaket 11 angeordnet. Das Dichtungspaket 11 umfasst zwei O-Ringe 12 und einen dazwischen liegenden Abstandsring 13. Wie bereits erwähnt und in Fig. 1 und 2 dargestellt, kann dieses Dichtungspaket 11 auf der Seite des Aufnahmeteils 5 durch einen Stützring 113, insbesondere durch einen axial am Verbindungsansatz 6 des Aufnahmeteils 5 anliegenden Stützring 113, komplettiert werden. Durch den Stützring 113, der wie der Abstandsring aus einem festeren, nicht wie die O-Ringe deformierbaren, Material besteht, wird einer Spaltextrusion der elastomeren O-Ringe 12 entgegengewirkt.

In bevorzugter Ausbildung kann - wie Fig. 1 und 2 zu entnehmen ist - vorgesehen sein, dass die Halteklammer 3 - in Richtung der Längsachse X-X gesehen - von der Grundgestalt her U-förmig ausgebildet ist, wobei die jeweils durch einen radialen Schlitz 17 getrennten Schenkel des U Federarme 15a, 15b, 16a, 16b ausbilden und wobei durch den Verbindungsbereich 19 der Schenkel des U, der einen starren Bereich der zumindest bereichsweise federelastischen Halteklammer 3 darstellen kann, auf der den freien Enden abgewandten Seite eine Betätigungsfläche 20 für die Halteklammer 3 ausgebildet ist. Die Halteklammer 3 ist dabei hinsichtlich einer durch sie verlaufenden Längsachse symmetrisch ausgebildet.

In besonders bevorzugter Ausbildung können dabei - wie ebenfalls dargestellt - in der von der Grundgestalt her - in Richtung der Längsachse X-X gesehen - U-förmig ausgebildeten Halteklammer 3 in den Schenkeln des U zwei Paare 15a/15b, 16a/16b von einander diametral gegenüber liegenden Rastarmen 15a, 15b, 16a, 16b ausgebildet sein, die in axialer Richtung X-X hintereinander angeordnet, jeweils durch einen Schlitz 18 voneinander getrennt und in radialer sowie axialer Richtung X-X federelastisch sind, wobei das erste Paar 15a/15b von Rastarmen 15a, 15b das Steckerteil S in der Halteposition HP formschlüssig gegen ein Herausziehen blockiert und das zweite Paar 16a/16b von Rastarmen 16a, 16b die Halteklammer 3 sowohl in der Vormontage-Stellung als auch in der Montage-Stellung verliersicher im Kupplungsteil 2 hält.

Die nicht dargestellte Vormontage-Stellung und die Montage-Stellung HP der Halteklammer 3 können koinzidieren, wobei die Halteklammer 3 in beiden Stellungen jeweils koaxial zur Achse X-X des Kupplungsteiles 2 ausgerichtet ist, jedoch in der Vormontage-Stellung vorzugsweise ein Spiel für eine radiale Bewegung aufweist. Die Halteklammer 3 kann bevorzugt in beiden Stellungen mit dem Außenumfang 15 des Kupplungsteils 2, insbesondere des Aufnahmeteils 5, nahezu überstandsfrei bündig abschließen.

Der Innenumfang der Aufnahmeöffnung 10 bzw. der Kanäle 100a, 100b des Kupplungsteils 2 ist vorteilhafterweise derart ausgebildet, dass in dem vollständig und korrekt eingesteckten Zustand des Steckerteils S das Kupplungsteil 2 eine dichtende Verbindung mit dem Steckerteil S bildet. Zur vollständigen Abdichtung dient dabei das Dichtungspaket 11 mit dem Stützring 113. Die Aufnahmeöffnung 10 ist an ihrem in Einsteckrichtung SR hinteren Ende im Grundkörper 4 durch eine Ringwand 14 begrenzt, die eine Durchgangsöffnung für das Fluid bildet.

Zur Montage des erfindungsgemäßen Steckverbinders 1 wird zunächst gemäß Fig. 1 das Dichtpaket 11 mit dem Stützring 113 und dann der Aufnahmekörper 5 in den Grundkörper 4 des Kupplungsteils 2 eingesetzt. Dann werden der Grundkörper 4 und der Aufnahmekörper 5 durch eine erfindungsgemäße Verrastung formschlüssig miteinander verbunden, indem in montagetechnisch einfacher Weise der Aufnahmekörper 5 in den Grundkörper 4 in Steckrichtung axial eingeschoben wird, bis die beiden Teile 4, 5 miteinander verrasten.

Danach wird die Halteklammer 3 in ihrer Einführrichtung M in das Kupplungsteil 2 eingesetzt, so dass zunächst der Vor-Montagezustand entsteht, bei dem die Führungszapfen 23 der vorderen Federarme 15a, 15b zum Eingriff in die komplementären Führungsschlitze 24 des Kupplungsteils 2 kommen. In diesem Zustand kann ein erfindungsgemäßer Steckverbinder 1 ausgeliefert werden. Allerdings kann altemativ, gegebenenfalls sogar bevorzugt, der Aufnahmekörper 5 auch schon vor dem Aufsetzen mit der Halteklammer 3 vormontiert werden.

Bei der späteren Endmontage berührt der Haltebund S2 des Steckerteiles S beim Einführen in die Halteklammer 3 die vorderen Federarme 15a, 15b und zieht vorzugsweise die Halteklammer 3 vor einem Aufspreizen radial ein, insofern die Halteklammer 3 noch ein Spiel für eine radiale Bewegung aufweisen kann. Die Halteklammer 2 wird dann durch den Bund S2 aufgeweitet, wobei sich die Federarme 15a, 15b radial auseinander bewegen, so dass der Bund S2 des Steckerteils S das erste Rastarm-Paar 15a/15b in axialer Richtung passieren kann. Danach können die Arme 15a, 15b schließlich hinter dem Bund S2 einrasten, wie dies in Fig. 2 gezeigt ist.

Zum Lösen der Steckverbindung wird die Halteklammer 3 durch Drücken auf ihre Betätigungsfläche 20 weiter in Betätigungsrichtung M verschoben. Während der Betätigung werden dadurch die Führungszapfen 23 in der Führungskontur der Führungsschlitze 24 radial nach außen verschoben. Damit werden die Federarme 15a, 15b aufgeweitet, so dass durch das Aufweiten der Federarme 15a, 15b der Steckerteil-Bund S2 wieder freigegeben wird. Die Verbindung kann nun gelöst werden, indem das Steckerteil S aus dem Steckverbinder 1 herausgezogen wird.

Zur Herstellung der erfindungsgemäßen Verrastung von Grundkörper 4 und Aufnahmekörper 5 ist vorgesehen, dass an dem in den Grundkörper 4 einsteckbaren Verbindungsansatz 6 des Aufnahmekörpers 5 frei ragende, radial federelastische, axial gerichtete Rastarme 51 ausgebildet sind, welche die radial nach außen weisenden Rastelemente 52 des Aufnahmekörpers 5 tragen, wobei - wie bereits erwähnt - der Grundkörper 4 und der Aufnahmekörper 5 jeweils einstückig aus Kunststoff geformt sind.

Zur Erleichterung der Montage und zum radialen Einlenken der Rastarme 51 beim Stecken können die radial nach außen weisenden Rastelemente 52 bevorzugt radial außenliegende, in Einsteckrichtung SR des Verbindungsansatzes 6 konvergierende Einführ-Schrägflächen FF1 aufweisen.

Zur Herstellung einer rein formschlüssigen Verbindung kann des Weiteren bevorzugt vorgesehen sein, dass die radial nach außen weisenden Rastelemente 52 des Aufnahmekörpers 5 an den axial gerichteten Rastarmen 51 Sperrflächen FF2 aufweisen, deren Ebene senkrecht zur Einsteckrichtung SR des Verbindungsansatzes 6 verläuft.

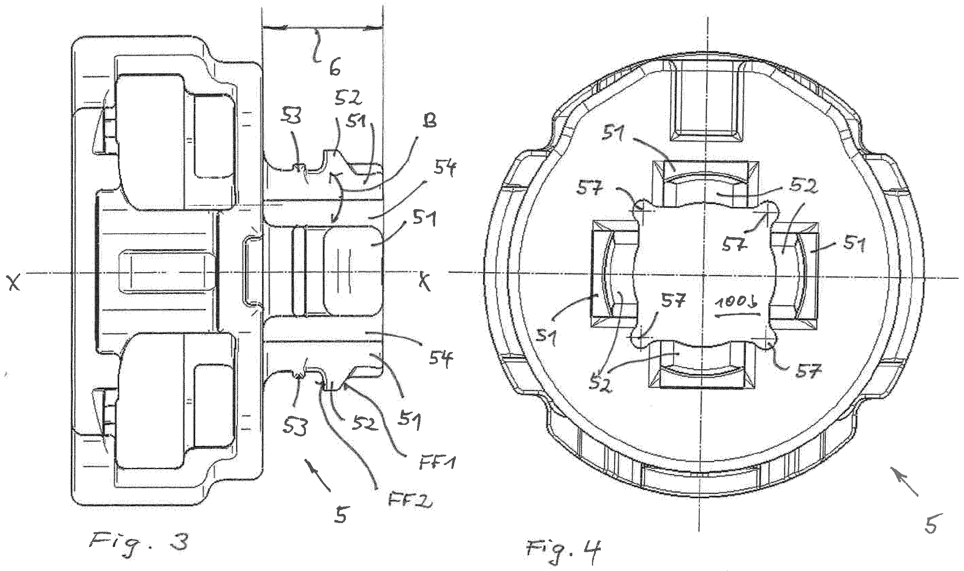

Die Einführ-Schrägflächen FF1 und die Sperrflächen FF2 sind nur in Fig. 2 und insbesondere in Fig. 3 mit Bezugszeichen bezeichnet. Durch das Vorhandensein der Einführ-Schrägflächen FF1 und der Sperrflächen FF2 sind die Rastelemente 52 als Widerhaken ausgebildet.

Wie insbesondere Fig. 4 zeigt, können in bevorzugter Ausführung insbesondere vier, umfangsgemäß um 90°, gegeneinander versetzte, axial gerichtete Rastarme 51 mit entsprechenden Rastelementen 52 ausgebildet sein.

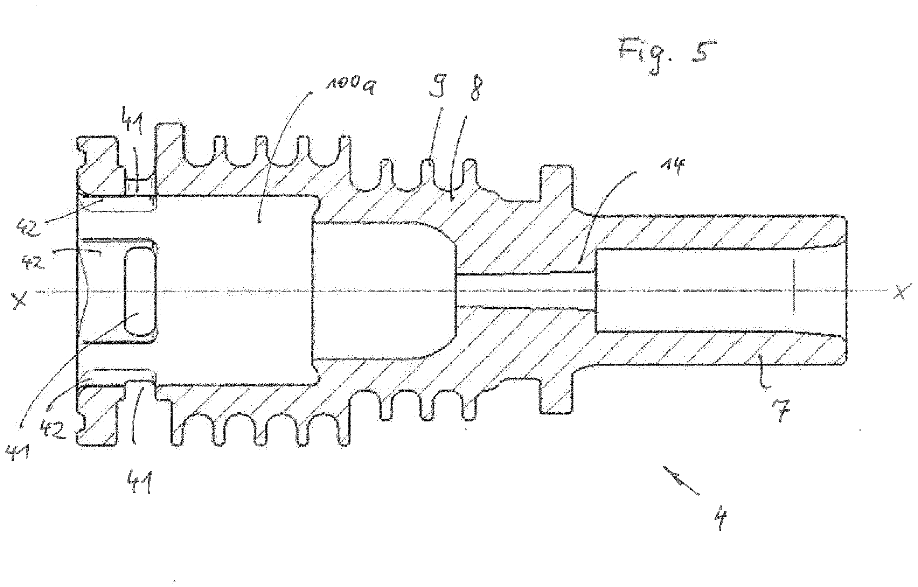

Um im Montagezustand des Aufnahmekörpers 5 im Grundkörper 4 die Möglichkeit eines Verkippens des Aufnahmekörpers 5 im Grundkörper 4 zu unterbinden und um beide Bauteile 4, 5 hinsichtlich der Mittenachse X-X zu zentrieren, befinden sich auf der Außenseite der Rastarme 51 Stützrippen 53, deren radiale Höhe insbesondere klein gegenüber der radialen Größe der Rastelemente 52, aber in erster Linie auch an innere Abstände der noch nachstehend unter Bezugnahme auf Fig. 5 beschriebenen Führungsnuten 42 angepasst ist. Hierzu wird auf Fig. 2 und insbesondere auf Fig. 3 verwiesen.

Im Endmontagezustand wirkt dabei, wie Fig. 2 veranschaulicht, auch das Steckerteil S zentrierend und stabilisierend, indem es radial innenseitig an den Rastarmen 51 anliegt und eine radiale Einwärtsbewegung derselben verhindert.

Wie Fig. 3 verdeutlicht, können sich bevorzugt in an mögliche, extremal zu erwartende Betriebsbedingungen angepasster Weise in dem Verbindungsansatz 6 zwischen den Rastarmen 51 Schlitze 54 mit insbesondere entsprechend einer Volumenausdehnung des Fluids beim Gefrieren dimensionierter umfangsgemäßer Breite B befinden. Diese Breite B ist in Kombination mit dem Elastizitätsmodul des Materials zu sehen. Dadurch kann mit Vorteil die Elastizität der Rastverbindung in gewünschter Weise beeinflusst werden.

Die für einen gegenseitigen Eingriff komplementär zu den Rastelementen 52 der Rastarme 51 ausgebildeten Rastelemente 41 sind am Grundkörper 4 ausgebildet, wobei diese Rastelemente 41 des Grundkörpers 4 vorzugsweise - wie insbesondere aus Fig. 5 hervorgeht - fensterartige Durchbrüche 41 in der Umfangswandung des Grundkörpers 4 sein können. Die fensterartigen Durchbrüche 41 sind in bevorzugter Ausführung gegeneinander umfangsgemäß um 90° versetzt und bei ihrer Herstellung in einfacher Weise in Entformungsrichtung im Werkzeug entformbar. Durch die fensterartigen Durchbrüche 41 wird eine Verdrehung des Aufnahmeteils 5 im Grundkörper 4 verhindert.

Um die Auslenkung der Rastarme 51 des Aufnahmekörpers 5 beim Stecken zu minimieren und dabei die Rastelemente 52 zu führen, können mit Vorteil im Grundkörper 4 axial an dessen Stirnseite beginnende und in den Durchbrüchen 41 mündende Führungsnuten 42 vorgesehen sein.

Was die Vorteilhaftigkeit der Erfindung betrifft, so ist diesbezüglich noch zu ergänzen, dass bei einer inneren Krafteinwirkung (Pfeil F1A in Fig. 2) die Kraft über den Bund S2 des Steckerteiles S als Druckkraft (Pfeil F2) auf die Halteklammer 3 übertragen wird. Die Halteklammer 3 stützt sich dabei am Aufnahmekörper 5 ab. Dadurch wird der Aufnahmekörper 5 in Kraftrichtung (Pfeil F3) belastet, insbesondere gedrückt. Über die Rastarme 51 (Pfeil F4) wird die Kraft dann in den Fenstern 41 auf den Grundkörper 4 übertragen (Pfeil F5). Die durch das Fluid erzeugte Kraft F1a teilt sich in der Kupplung auf und greift einerseits an den Flächen des Steckers S1 an, welche nicht durch das Dichtungspaket 11 vom Fluid getrennt sind, und andererseits direkt am Dichtungspaket 11. Das Dichtungspaket 11 wiederum überträgt die Kräfte teilweise direkt auf den Schaft des Steckerteils S, teilweise direkt auf die Rastarme 51 (Pfeil F6), wobei - bereits wie erwähnt - die Rastarme 51 vorteilhafterweise durch das Steckerteil S gegen ein Einfallen nach innen gesichert werden. So wird die Kraft teilweise durch das Steckerteil S, und dabei insbesondere über den Ringbund S2, auf die Halteklammer 3 und die nachgeordneten Teile auf die Rastarme 51 übertragen und teilweise direkt über das Dichtungspaket 11 und den Stützring 113.

Ähnlich verhält es sich bei einer äußeren Krafteinwirkung auf das Steckerteil (Pfeil F1B in Fig. 2). Die Kraft wird vom Steckerteil S auf die Halteklammer 3 übertragen. (Pfeil F2). Diese stützt sich im Aufnahmekörper 5 ab und überträgt die Kraft auf diesen (Pfeil F3). Dadurch wird der Aufnahmekörper 5 in Kraftrichtung belastet, insbesondere gezogen (Pfeil F4), und über die Rastarme 51 des Aufnahmekörpers 5 wird die Kraft schließlich in den Fenstern an den Grundkörper 4 übertragen (Pfeil F5). Die Rastarme 51 werden dabei durch das Steckerteil S gegen ein Einfallen nach innen gesichert.

Es kann also festgestellt werden, dass eine Gesamtdehnung des Kupplungsteils 2 sich bei einer einwirkenden Kraft insbesondere mit Vorteil aus einer Reihenund/oder Parallelschaltung von Elastizitäten der beschriebenen Einzelteile ergibt.

Durch die Erfindung ist unter Einsatz eines erfindungsgemäßen Kupplungsteiles 2 im Hinblick auf eine resultierende Gesamt-Elastizität eines mit dem erfindungsgemäßen Steckverbinder 1 hergestellten Systems eine gezielte Reihen- und Parallelschaltung möglich, wobei die genannten Bauteile durch eine konstruktive geometrische Gestaltung, z. B. eine Variation der oben genannten Schlitzbreite B, und/oder Materialauswahl, z. B. eine Variation der Hookeschen Elastizitätsmoduln durch Variation des Faseranteils im Kunststoffwerkstoff, in geeigneter Weise beeinflusst werden können. Dazu können die Elastizitätsmoduln der Einzelteile ihren Anforderungen entsprechend unterschiedlich, insbesondere bedarfsweise sowohl kleiner als auch größer als bei herkömmlichen Lösungen, eingestellt werden. Der Elastizitätsmodul sowohl des erfindungsgemäßen Kupplungsteiles 2 als auch des erfindungsgemäßen Steckverbinders 1 kann somit kleiner eingestellt werden als herkömmlich, oder umgekehrt: die Nachgiebigkeit sowohl des erfindungsgemäßen Kupplungsteiles 2 als auch die des erfindungsgemäßen Steckverbinders 1 kann größer ausfallen als herkömmlich. Dies wird insbesondere dadurch deutlich, dass erfindungsgemäß anstelle des aus der EP 2 570 710 A1 bekannten zusätzlichen Ringsegments die einstückig angeformten Rastarme 51 als Träger der Rastelemente 52 dienen. Dadurch kann mit Vorteil ein eventuell erhöhtes Gefriervolumen des Fluids schaden- und problemlos kompensiert werden.

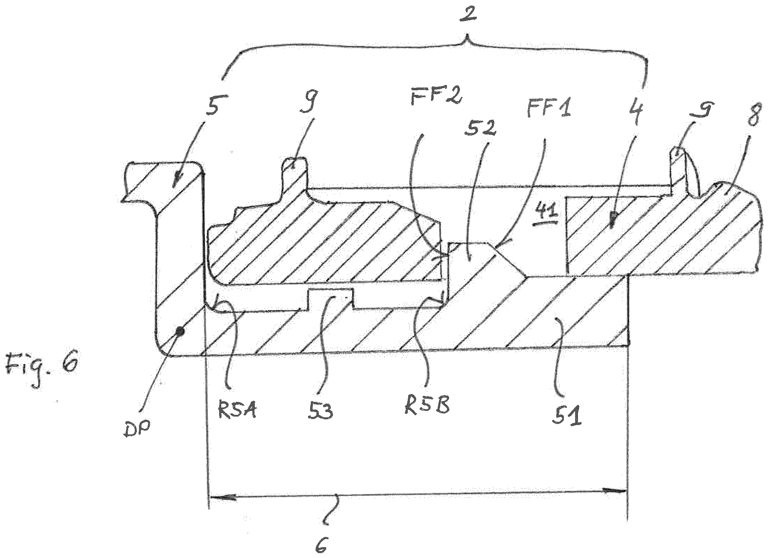

Zur Notwendigkeit des Schlitzes 54 zwischen den Rastarmen 51, und damit zur Notwendigkeit der Stützrippen 53, sollte an dieser Stelle, insbesondere unter Verweis auf Fig. 6 bis Fig. 8 in Zusammenschau mit Fig. 2 noch ausgeführt werden, dass der Spalt zwischen der Außenwandung des Steckerteils S und der Innenwandung des Grundkörpers 4 durch die Größe des Dichtungspaketes 11 bestimmt wird, also insbesondere durch den jeweiligen Durchmesser der Dichtringe 12 unter Berücksichtigung ihrer notwendigen Verpressung. Wenn man eine Dicke der Rastarme 51 wählen würde, die diesen Spalt komplett ausfüllt, dann würden die Rastarme 51 sehr starr sein, und ein Einstecken bis zum Verrasten würde hohe Kräfte erfordern. Durch die reduzierte Dicke der Rastarme 51 können diese in einem Drehpunkt DP, um den sie sich beim Auslenken bewegen, besser einschwenken.

Des Weiteren ist es aufgrund der Reduzierung der Dicke der Rastarme 51 möglich, an den Rastelementen 52 der Rastarme 51 Radien R5A, R5B anzubringen, die in radial umlaufenden Kantenbereichen, welche aufgrund einer bevorzugt gekröpften Ausbildung der Rastarme vorhanden sind, Kerbwirkungen verhindert. Um nun ein durch die Reduzierung der Dicke mögliches Kippen des Aufnahmekörpers 5 zu verhindern, werden die Stützrippen 53 notwendig. Diese Stützrippen 53 repräsentieren somit eine nicht reduzierte Dicke der Rastarme 51.

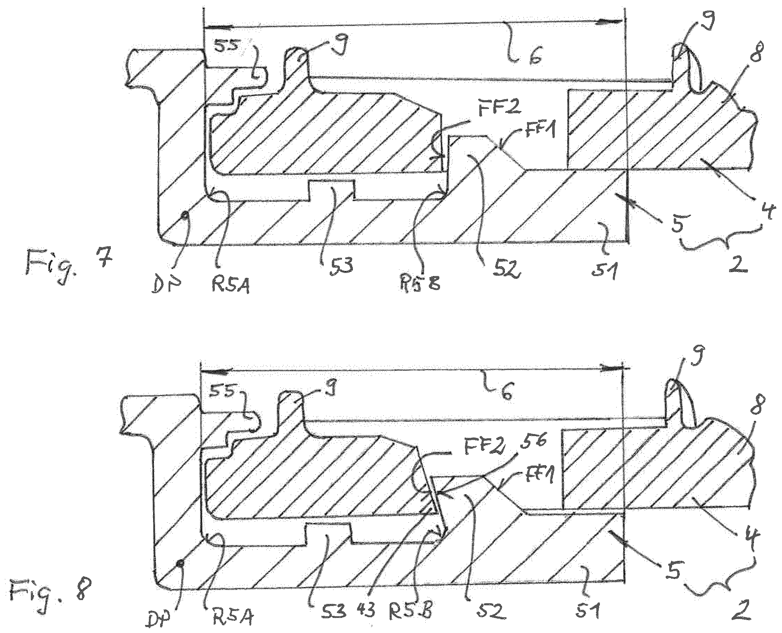

Um ein Kippen des Aufnahmekörpers 5 weiter einzuschränken, kann der Grundkörper 4 und/oder der Aufnahmekörper 5 mit Mitteln zum Verhindern des Kippens ausgestattet sein. In den in Fig. 7 und 8 dargestellten Ausführungen stützt beispielsweise ein Ringbund 55 den Aufnahmekörper 5 am Grundkörper 4 gegen ein Verkippen ab. Hier sind allerdings auch noch eine Vielzahl andere Lösungen denkbar.

Außerdem ist in der Ausführung gemäß Fig. 8 als zusätzliches Mittel für eine Druckverriegelung der Rastarme 51 jeweils eine Hinterschneidung 56 an den Rastarmen 51 ausgebildet, wobei jeweils die Ebenen der Sperrflächen FF2 in Einsteckrichtung SR des Verbindungsansatzes 6 konvergieren. Der Grundkörper 4 weist eine zu dieser Hinterschneidung 56 komplementäre Nase 43 auf. Durch das Zusammenwirken von Hinterschneidung 56 und komplementärer Nase 43 erfolgt ein als zusätzliche Verriegelung wirkendes formschlüssiges Ineinandergreifen der beiden Teile 56, 43. Es ist möglich, den Winkel zwischen der an Nase 43 anliegenden Seite und der Steckachse X-X der Rastelemente 52 kleiner als 90°, minimal 45°, vorzugsweise im Bereich von 70° bis 80° auszuführen.

Aus Fig. 4 geht hervor, dass jeweils beidseitig der Rastarme 51 in Längsrichtung verlaufende Nuten 57 im Aufnahmekörper 5 vorgesehen sind, welche ähnlich wie Schlitze wirken, insofern sie die Nachgiebigkeit des Aufnahmekörpers 5 erhöhen.

## Patentansprüche

1. Kupplungsteil (2) für einen Steckverbinder (1) zur Herstellung von Schlauch- und/oder Rohrverbindungen, umfassend einen als Muffenteil ausgebildeten, einen axial gerichteten Einsteckkanal (100a) für ein Steckerteil (S) aufweisenden Grundkörper (4) und einen ebenfalls einen axial gerichteten Einsteckkanal (100b) für das Steckerteil (S) aufweisenden Aufnahmekörper (5) für ein Halteteil (3), welches der Fixierung des Steckerteiles (S) dient, wobei das Halteteil (3) in dem Aufnahmekörper (5) montierbar ist, wobei der Aufnahmekörper (5) einen in den axial gerichteten Einsteckkanal (100a) des Grundkörpers (4) einsteckbaren Verbindungsansatz (6) aufweist und wobei der Grundkörper (4) und der Aufnahmekörper (5) im Montagezustand über eine Rastverbindung miteinander verbunden sind, die einerseits durch nach außen weisende, dem Aufnahmekörper (5) zugeordnete Rastelemente (52) und andererseits durch für einen gegenseitigen Eingriff komplementär ausgebildete Rastelemente (41) des Grundkörpers (4) gebildet ist,
**dadurch gekennzeichnet, dass** an dem in den Grundkörper (4) einsteckbaren Verbindungsansatz (6) des Aufnahmekörpers (5) frei ragende, radial federelastische, axial gerichtete Rastarme (51) ausgebildet sind, welche die radial nach außen weisenden Rastelemente (52) des Aufnahmekörpers (5) tragen und sich auf der Außenseite der Rastarme (51) Stützrippen (53) befinden, deren radiale Höhe klein gegenüber der radialen Größe der Rastelemente (52) ist, wobei der Grundkörper (4) und der Aufnahmekörper (5) jeweils einstückig aus Kunststoff geformt sind.

2. Kupplungsteil (2) nach Anspruch 1,
**dadurch gekennzeichnet, dass** der Grundkörper (4) und der Aufnahmekörper (5) Spritzguss-Formteile sind, die aus, insbesondere faserverstärktem, Kunststoff bestehen.

3. Kupplungsteil (2) nach Anspruch 1 oder 2,
**dadurch gekennzeichnet, dass** an dem in den Grundkörper (4) einsteckbaren Verbindungsansatz (6) des Aufnahmekörpers (5) zwei, umfangsgemäß um 180° gegeneinander versetzte, drei, umfangsgemäß um 120° gegeneinander versetzte, oder insbesondere vier, umfangsgemäß um 90° gegeneinander versetzte, axial gerichtete Rastarme (51) ausgebildet sind.

4. Kupplungsteil (2) nach einem der Ansprüche 1 bis 3,
**dadurch gekennzeichnet, dass** die radial nach außen weisenden Rastelemente (52) des Aufnahmekörpers (5) an den axial gerichteten Rastarmen (51) radial außenliegende, in Einsteckrichtung (SR) des Verbindungsansatzes (6) konvergierende Einführ-Schrägflächen (FF1) aufweisen.

5. Kupplungsteil (2) nach einem der Ansprüche 1 bis 4,
**dadurch gekennzeichnet, dass** die radial nach außen weisenden Rastelemente (52) des Aufnahmekörpers (5) an den axial gerichteten Rastarmen (51) Sperrflächen (FF2) aufweisen, deren Ebene senkrecht zur Einsteckrichtung (SR) des Verbindungsansatzes (6) verläuft.

6. Kupplungsteil (2) nach Anspruch 4 oder 5,
**dadurch gekennzeichnet, dass** die radial nach außen weisenden Rastelemente (52) des Aufnahmekörpers (5) aufgrund der in Einsteckrichtung (SR) des Verbindungsansatzes (6) konvergierenden Einführ-Schrägflächen (FF1) und aufgrund der Sperrflächen (FF2), deren Ebene senkrecht zur Einsteckrichtung (SR) des Verbindungsansatzes (6) verläuft oder in Einsteckrichtung (SR) des Verbindungsansatzes (6) konvergiert, als Widerhaken ausgebildet sind.

7. Kupplungsteil (2) nach einem der Ansprüche 1 bis 6,
**dadurch gekennzeichnet, dass** sich in dem Verbindungsansatz (6) zwischen den Rastarmen (51) Schlitze (54) oder Nuten (57) mit insbesondere entsprechend einer Volumenausdehnung des Fluids beim Gefrieren dimensionierter umfangsgemäßer Breite (B) befinden.

8. Kupplungsteil (2) nach einem der Ansprüche 1 bis 7,
**dadurch gekennzeichnet, dass** sich in dem Grundkörper (4) an dessen Innenwandung axial gerichtete Führungsbahnen (42) für die Rastarme (51) des Aufnahmekörpers (5) befinden.

9. Kupplungsteil (2) nach einem der Ansprüche 1 bis 7,
**dadurch gekennzeichnet, dass** die Rastelemente (41) des Grundkörpers (4) fensterartige Durchbrüche (41) in der Umfangswandung des Grundkörpers (4) sind.

10. Kupplungsteil (2) nach Anspruch 9,
**dadurch gekennzeichnet, dass** im Grundkörper (4) axial verlaufende, an der Stirnseite beginnende und in den Durchbrüchen (41) mündende Führungsnuten (42) als axial gerichtete Führungsbahnen (42) vorgesehen sind.

11. Kupplungsteil (2) nach Anspruch 10,
**dadurch gekennzeichnet, dass** die radiale Höhe an die innere Abstände der Führungsnuten (42) angepasst ist.

12. Kupplungsteil (2) nach einem der Ansprüche 1 bis 11,
**dadurch gekennzeichnet, dass** der Grundkörper (4) als Verbinderstück ausgebildet ist, welches einen Anschlussabschnitt (7) zur Anschlussverbindung mit einer Fluidleitung aufweist und welches bevorzugt einen Heizabschnitt (8) aufweist, in dem elektrische Heizmittel in einer den Grundkörper (4) zumindest teilweise umschließenden Anordnung angeordnet sind, wozu auf einem Außenumfang des Grundkörpers (4) Führungselemente (9), insbesondere wendelförmige Führungselemente (9), angeordnet bzw. ausgebildet sind.

13. Kupplungsteil (2) nach einem der Ansprüche 1 bis 12,
**dadurch gekennzeichnet, dass** das der Aufnahmekörper (5) für das als Halteklammer (3) ausgebildete Halteteil (3) ein von der Grundgestalt her hohlzylindrisches, an den jeweiligen Stirnwänden (29, 30) des Hohlzylinders jeweils geschlossenes Gehäuse für die Halteklammer (3) bildet, welches auf zwei einander diametral gegenüber liegenden Seiten umfangsgemäße Öffnungen (31, 32), zum Durchgriff der Halteklammer (3), insbesondere eine Einführöffnung (31) und eine Austrittsöffnung (32), aufweist.

14. Kupplungsteil (2) nach Anspruch 13,
**dadurch gekennzeichnet, dass** sich an Federarmen (15a, 15b) der Halteklammer (3) Führungszapfen (23) befinden.

15. Kupplungsteil (2) nach Anspruch 14,
**dadurch gekennzeichnet, dass** sich in dem Aufnahmekörper (5) für die Halteklammer (3), auf einer/der der Einführrichtung (SR) des Steckerteils (S) zugewandten Stirnwand (29) des Kupplungsteils (2) Führungsschlitze (24) zum Eingriff von den an den Federarmen (15a, 15b) der Halteklammer (3) befindlichen komplementären Führungszapfen (23) befinden.

16. Kupplungsteil (2) nach Anspruch 15,
**dadurch gekennzeichnet, dass** in den Führungsschlitzen (24) jeweils eine Steuerkontur ausgebildet ist, durch die im Zusammenwirken mit den komplementären Führungszapfen (23) einerseits eine Einführbewegung und eine Ausschubbewegung der Halteklammer (3) quer zur Steckrichtung (SR) des Steckerteils (S) begrenzt wird, und andererseits bei einer Bewegung der Halteklammer (3) quer zur Steckrichtung (SR) des Steckerteils (S) eine radiale Auswärtsbewegung oder eine radiale Einwärtsbewegung der Federarme (15a, 15b) bewirkt wird, an denen sich die Führungszapfen (23) befinden.

17. Kupplungsteil (2) nach einem der Ansprüche 1 bis 16,
**dadurch gekennzeichnet, dass** am Grundkörper 4 und/oder am Aufnahmekörper (5), z. B. an dessen Rastarmen (51), Mittel zur Verhinderung eines Verkippens (55, 56, 43) angeordnet sind, um ein Verkippen des Grundkörpers (4) gegenüber dem Aufnahmekörper (5) einzuschränken.

18. Steckverbinder (1) zur Herstellung von Schlauch- und/oder Rohrverbindungen mit einem Kupplungsteil (2), umfassend einen als Muffenteil ausgebildeten, einen axial gerichteten Einsteckkanal (100a) für ein Steckerteil (S) aufweisenden Grundkörper (4) und einen ebenfalls einen axial gerichteten Einsteckkanal (100b) für das Steckerteil (S) aufweisenden Aufnahmekörper (5) für ein Halteteil (3), welches der Fixierung des Steckerteiles (S) dient, wobei das Halteteil (3) in dem Aufnahmekörper (5) montierbar ist, wobei der Aufnahmekörper (5) einen in den axial gerichteten Einsteckkanal (100a) des Grundkörpers (4) einsteckbaren Verbindungsansatz (6) aufweist und wobei der Grundkörper (4) und der Aufnahmekörper (5) im Montagezustand über eine Rastverbindung miteinander verbunden sind, die einerseits durch nach außen weisende, dem Aufnahmekörper (5) zugeordnete Rastelemente (52) und andererseits durch für einen gegenseitigen Eingriff komplementär ausgebildete Rastelemente (41) des Grundkörpers (4) gebildet ist, wobei an dem in den Grundkörper (4) einsteckbaren Verbindungsansatz (6) des Aufnahmekörpers (5) frei ragende, radial federelastische, axial gerichtete Rastarme (51) ausgebildet sind, welche die radial nach außen weisenden Rastelemente (52) des Aufnahmekörpers (5) tragen und sich auf der Außenseite der Rastarme (51) Stützrippen (53) befinden, deren radiale Höhe klein gegenüber der radialen Größe der Rastelemente (52) ist.

19. Steckverbinder (1) nach Anspruch 18,
**dadurch gekennzeichnet, dass** das Halteteil (3) einstückig, insbesondere als ein aus Kunststoff bestehendes Spritzguss-Formteil, ausgebildet ist.

20. Steckverbinder (1) nach Anspruch 18 oder 19,
**gekennzeichnet durch** die Merkmale des kennzeichnenden Teils eines oder mehrerer der Ansprüche 2 bis 17.

21. Steckverbinder (1) nach einem der Ansprüche 18 bis 20,
**dadurch gekennzeichnet, dass** das Halteteil (3) als eine - in Richtung der Längsachse (X-X) gesehen - von der Grundgestalt her U-förmig ausgebildeten Halteklammer (3) ausgebildet ist, wobei die Schenkel des U Federarme (15a, 15b, 16a, 16b) ausbilden und wobei durch einen Verbindungsbereich (19) der Schenkel des U auf der den freien Enden der Federarme (15a, 15b, 16a, 16b) abgewandten Seite eine Betätigungsfläche (20) für die Halteklammer (3) ausgebildet ist.

22. Steckverbinder (1) nach einem der Ansprüche 18 bis 21,
**dadurch gekennzeichnet, dass** in dem Kupplungsteil (2), insbesondere in dessen Grundkörper (4), ein Dichtungspaket (11) angeordnet ist, welches vorzugsweise zwei Dichtungsringe (12), insbesondere elastomere O-Ringe, und einen dazwischen angeordneten Abstandsring (13) sowie insbesondere einen zusätzlichen Stützring (113) umfasst.

## Claims

1. Coupling part (2) for a plug connector (1) for producing hose and/or pipe connections, comprising a basic body (4), which is formed as a socket part and has an axially directed plug-in channel (100a) for a plug part (S), and a receiving body (5), which likewise has an axially directed plug-in channel (100b) for the plug part (S), for a retaining part (3) which serves for fixing the plug part (S), wherein the retaining part (3) can be mounted in the receiving body (5), wherein the receiving body (5) has a connecting projection (6) which can be plugged into the axially directed plug-in channel (100a) of the basic body (4), and wherein, in the mounted state, the basic body (4) and the receiving body (5) are connected to one another via a latching connection which is formed, on the one hand, by outwardly directed latching elements (52) assigned to the receiving body (5) and, on the other hand, by latching elements (41) of the basic body (4) which are of complementary design for a mutual engagement,
**characterized in that** freely projecting, radially resilient, axially directed latching arms (51) are formed on the connecting projection (6) of the receiving body (5) that can be plugged into the basic body (4), which latching arms (51) bear the radially outwardly directed latching elements (52) of the receiving body (5), and supporting ribs (53) whose radial height is small by comparison with the radial size of the latching elements (52) are situated on the outside of the latching arms (51), wherein the basic body (4) and the receiving body (5) are each formed in one piece from plastic.

2. Coupling part (2) according to Claim 1,
**characterized in that** the basic body (4) and the receiving body (5) are injection-moulded parts which consist of plastic, in particular fibre-reinforced plastic.

3. Coupling part (2) according to Claim 1 or 2,
**characterized in that** two axially directed latching arms (51) circumferentially offset to one another by 180°, three axially directed latching arms (51) circumferentially offset to one another by 120°, or in particular four axially directed latching arms (51) circumferentially offset to one another by 90° are formed on the connection projection (6) of the receiving body (5) that can be plugged into the basic body (4).

4. Coupling part (2) according to one of Claims 1 to 3,
**characterized in that** the radially outwardly directed latching elements (52) of the receiving body (5) have, on the axially directed latching arms (51), radially outer oblique insertion surfaces (FF1) which converge in the plug-in direction (SR) of the connecting projection (6).

5. Coupling part (2) according to one of Claims 1 to 4,
**characterized in that** the radially outwardly directed latching elements (52) of the receiving body (5) have, on the axially directed latching arms (51), blocking surfaces (FF2) whose plane extends perpendicularly to the plug-in direction (SR) of the connecting projection (6).

6. Coupling part (2) according to Claim 4 or 5,
**characterized in that** the radially outwardly directed latching elements (52) of the receiving body (5) are formed as barbs on account of the oblique insertion surfaces (FF1) which converge in the plug-in direction (SR) of the connecting projection (6) and on account of the blocking surfaces (FF2) whose plane extends perpendicularly to the plug-in direction (SR) of the connecting projection (6) or converges in the plug-in direction (SR) of the connecting projection (6).

7. Coupling part (2) according to one of Claims 1 to 6,
**characterized in that** slots (54) or grooves (57) having in particular a circumferential width (B) which is dimensioned to correspond to a volumetric expansion of the fluid upon freezing are situated in the connecting projection (6) between the latching arms (51).

8. Coupling part (2) according to one of Claims 1 to 7,
**characterized in that** axially directed guide paths (42) for the latching arms (51) of the receiving body (5) are situated in the basic body (4) on its inner wall.

9. Coupling part (2) according to one of Claims 1 to 7,
**characterized in that** the latching elements (41) of the basic body (4) are window-like apertures (41) in the circumferential wall of the basic body (4).

10. Coupling part (2) according to Claim 9,
**characterized in that** axially extending guide grooves (42) which begin at the end side and open into the apertures (41) are provided as axially directed guide paths (42) in the basic body (4).

11. Coupling part (2) according to Claim 10,
**characterized in that** the radial height is adapted to the inner spacings of the guide grooves (42).

12. Coupling part (2) according to one of Claims 1 to 11,
**characterized in that** the basic body (4) is designed as a connector piece which has a connection portion (7) for connecting to a fluid line and which preferably has a heating portion (8) in which electrical heating means are arranged in an arrangement at least partially enclosing the basic body (4), for which purpose guide elements (9), in particular helical guide elements (9), are arranged or formed on an outer circumference of the basic body (4).

13. Coupling part (2) according to one of Claims 1 to 12,
**characterized in that** the receiving body (5) for the retaining part (3), which is designed as a retaining clip (3), forms a housing for the retaining clip (3) that is hollow cylindrical in its basic form, is closed on each of the respective end walls (29, 30) of the hollow cylinder and has, on two diametrically opposite sides, circumferential openings (31, 32) to be engaged through by the retaining clip (3), in particular an insertion opening (31) and an outlet opening (32).

14. Coupling part (2) according to Claim 13,
**characterized in that** guide pegs (23) are situated on spring arms (15a, 15b) of the retaining clip (3).

15. Coupling part (2) according to Claim 14,
**characterized in that** guide slots (24) for the engagement of the complementary guide pegs (23) situated on the spring arms (15a, 15b) of the retaining clip (3) are situated in the receiving body (5) for the retaining clip (3) on an/the end wall (29) of the coupling part (2) that faces the insertion direction (SR) of the plug part (S).

16. Coupling part (2) according to Claim 15,
**characterized in that** a control contour is formed in each of the guide slots (24), by means of which control contour, in interaction with the complementary guide pegs (23), an insertion movement and a push-out movement of the retaining clip (3) transversely to the plugging direction (SR) of the plug part (S) is limited, on the one hand, and, on the other hand, during a movement of the retaining clip (3) transversely to the plugging direction (SR) of the plug part (S), a radial outward movement or a radial inward movement of the spring arms (15a, 15b) on which the guide pegs (23) are situated is brought about.

17. Coupling part (2) according to one of Claims 1 to 16,
**characterized in that** means for preventing a tilting (55, 56, 43) are arranged on the basic body (4) and/or on the receiving body (5), for example on its latching arms (51), in order to limit a tilting of the basic body (4) with respect to the receiving body (5).

18. Plug connector (1) for producing hose and/or pipe connections having a coupling part (2), comprising a basic body (4), which is designed as a socket part and has an axially directed plug-in channel (100a) for a plug part (S), and a receiving body (5), which likewise has an axially directed plug-in channel (100b) for the plug part (S), for a retaining part (3) which serves for fixing the plug part (S), wherein the retaining part (3) can be mounted in the receiving body (5), wherein the receiving body (5) has a connecting projection (6) which can be plugged into the axially directed plug-in channel (100a) of the basic body (4), and wherein, in the mounted state, the basic body (4) and the receiving body (5) are connected to one another via a latching connection which is formed, on the one hand, by outwardly directed latching elements (52) assigned to the receiving body (5) and, on the other hand, by latching elements (41) of the basic body (4) which are of complementary design for a mutual engagement, wherein freely projecting, radially resilient, axially directed latching arms (51) are formed on the connecting projection (6) of the receiving body (5) that can be plugged into the basic body (4), which latching arms (51) bear the radially outwardly directed latching elements (52) of the receiving body (5)s, and supporting ribs (53) whose radial height is small by comparison with the radial size of the latching elements (52) are situated on the outside of the latching arms (51).

19. Plug connector (1) according to Claim 18,
**characterized in that** the retaining part (3) is formed in one piece, in particular as an injection-moulded part consisting of plastic.

20. Plug connector (1) according to Claim 18 or 19,
**characterized by** the features of the characterizing part of one or more of Claims 2 to 17.

21. Plug connector (1) according to one of Claims 18 to 20,
**characterized in that** the retaining part (3) is designed as a retaining clip (3) which, as viewed in the direction of the longitudinal axis (X-X), is U-shaped in its basic form, wherein the legs of the U form spring arms (15a, 15b, 16a, 16b), and wherein an actuation surface (20) for the retaining clip (3) is formed by a connecting region (19) of the legs of the U on the side facing away from the free ends of the spring arms (15a, 15b, 16a, 16b).

22. Plug connector (1) according to one of Claims 18 to 21,
**characterized in that** a sealing pack (11) is arranged in the coupling part (2), in particular in its basic body (4), which sealing pack (11) preferably comprises two sealing rings (12), in particular elastomer O rings, and a spacer ring (13) arranged therebetween and in particular an additional supporting ring (113).

## Revendications

1. Partie d'accouplement (2) pour un raccord enfichable (1) pour la fabrication de raccords de tuyaux et/ou de tubes, comprenant un corps de base (4) réalisé sous forme de partie de manchon, présentant un canal d'enfichage orienté axialement (100a) pour une partie de fiche (S) et un corps de réception (5) présentant également un canal d'enfichage orienté axialement (100b) pour la partie de fiche (S), pour une partie de fixation (3) qui sert à la fixation de la partie de fiche (S), la partie de fixation (3) pouvant être montée dans le corps de réception (5), le corps de réception (5) présentant une pièce de raccordement (6) pouvant être enfichée dans le canal d'enfichage orienté axialement (100a) du corps de base (4) et le corps de base (4) et le corps de réception (5) étant raccordés l'un à l'autre dans l'état de montage par le biais d'un raccord par encliquetage qui est formé d'une part par des éléments d'encliquetage (52) orientés vers l'extérieur, associés au corps de réception (5) et d'autre part par des éléments d'encliquetage (41) du corps de base (4) réalisés de manière complémentaire en vue d'un engagement mutuel,
**caractérisée en ce que** des bras d'encliquetage (51) orientés axialement, radialement élastiques à ressort, faisant saillie librement, sont réalisés au niveau de la pièce de raccordement (6) du corps de réception (5) pouvant être enfichée dans le corps de base (4), lesquels portent les éléments d'encliquetage (52) du corps de réception (5) orientés radialement vers l'extérieur, et des nervures de support (53) sont situées sur le côté extérieur des bras d'encliquetage (51), leur hauteur radiale étant petite par rapport à la dimension radiale des éléments d'encliquetage (52), le corps de base (4) et le corps de réception (5) étant chacun formés d'une seule pièce en plastique.

2. Partie d'accouplement (2) selon la revendication 1,
**caractérisée en ce que** le corps de base (4) et le corps de réception (5) sont des pièces moulées par injection qui se composent de plastique, en particulier renforcé par des fibres.

3. Partie d'accouplement (2) selon la revendication 1 ou 2,
**caractérisée en ce que** deux bras d'encliquetage (51) orientés axialement, décalés sur la périphérie de 180° l'un par rapport à l'autre, ou trois bras d'encliquetage (51) orientés axialement, décalés sur la périphérie de 120° les uns par rapport aux autres, ou en particulier quatre bras d'encliquetage (51) orientés axialement, décalés sur la périphérie de 90° les uns par rapport aux autres, sont réalisés au niveau de la pièce de raccordement (6) du corps de réception (5) pouvant être enfichée dans le corps de base (4).

4. Partie d'accouplement (2) selon l'une quelconque des revendications 1 à 3,
**caractérisée en ce que** les éléments d'encliquetage (52) du corps de réception (5), orientés radialement vers l'extérieur, présentent des surfaces obliques d'insertion (FF1) situées radialement à l'extérieur au niveau des bras d'encliquetage orientés axialement (51), convergeant dans la direction d'enfichage (SR) de la pièce de raccordement (6).

5. Partie d'accouplement (2) selon l'une quelconque des revendications 1 à 4,
**caractérisée en ce que** les éléments d'encliquetage (52) du corps de réception (5), orientés radialement vers l'extérieur, présentent des surfaces d'arrêt (FF2) au niveau des bras d'encliquetage (51) orientés axialement, dont le plan s'étend perpendiculairement à la direction d'enfichage (SR) de la pièce de raccordement (6).

6. Partie d'accouplement (2) selon la revendication 4 ou 5,
**caractérisée en ce que** les éléments d'encliquetage (52) du corps de réception (5), orientés radialement vers l'extérieur, sont réalisés sous forme de butées en raison des surfaces obliques d'insertion (FF1) convergeant dans la direction d'enfichage (SR) de la pièce de raccordement (6) et en raison des surfaces d'arrêt (FF2) dont le plan s'étend perpendiculairement à la direction d'enfichage (SR) de la pièce de raccordement (6) ou converge dans la direction d'enfichage (SR) de la pièce de raccordement (6).

7. Partie d'accouplement (2) selon l'une quelconque des revendications 1 à 6,
**caractérisée en ce que** des fentes (54) ou des rainures (57) ayant notamment une largeur périphérique (B) dimensionnée de manière à correspondre à une expansion volumique du fluide en cas de gel se trouvent dans la pièce de raccordement (6) entre les bras d'encliquetage (51).

8. Partie d'accouplement (2) selon l'une quelconque des revendications 1 à 7,
**caractérisée en ce que** des voies de guidage (42) orientées axialement pour les bras d'encliquetage (51) du corps de réception (5) se trouvent dans le corps de base (4) au niveau de sa paroi intérieure.

9. Partie d'accouplement (2) selon l'une quelconque des revendications 1 à 7,
**caractérisée en ce que** les éléments d'encliquetage (41) du corps de base (4) sont des orifices de type fenêtre (41) dans la paroi périphérique du corps de base (4).

10. Partie d'accouplement (2) selon la revendication 9,
**caractérisée en ce que** des rainures de guidage (42) s'étendant axialement dans le corps de base (4), commençant au niveau du côté frontal et débouchant dans les orifices (41), sont prévues sous forme de voies de guidage orientées axialement (42).

11. Partie d'accouplement (2) selon la revendication 10,
**caractérisée en ce que** la hauteur radiale est adaptée aux espacements intérieurs des rainures de guidage (42).

12. Partie d'accouplement (2) selon l'une quelconque des revendications 1 à 11,
**caractérisée en ce que** le corps de base (4) est réalisé sous forme de pièce de connecteur qui présente une portion de raccordement (7) pour le raccordement à une conduite fluidique et qui présente de préférence une portion de chauffage (8) dans laquelle des moyens de chauffage électriques sont disposés suivant un agencement entourant au moins en partie le corps de base (4), ce pourquoi des éléments de guidage (9) notamment des éléments de guidage (9) en forme d'hélice sont disposés ou réalisés sur une périphérie extérieure du corps de base (4).

13. Partie d'accouplement (2) selon l'une quelconque des revendications 1 à 12,
**caractérisée en ce que** le corps de réception (5) pour la partie de fixation (3) réalisée en tant que pince de fixation (3) forme un boîtier fermé respectif pour la pince de fixation (3), de forme de base cylindrique creuse, au niveau des parois frontales respectives (29, 30) du cylindre creux, qui présente sur deux côtés diamétralement opposés des ouvertures périphériques (31, 32) pour l'accès à la pince de fixation (3), en particulier une ouverture d'insertion (31) et une ouverture de sortie (32).

14. Partie d'accouplement (2) selon la revendication 13,
**caractérisée en ce que** des tourillons de guidage (23) se trouvent sur des bras de ressort (15a, 15b) de la pince de fixation (3).

15. Partie d'accouplement (2) selon la revendication 14,
**caractérisée en ce que** des fentes de guidage (24) pour l'engagement des tourillons de guidage complémentaires (23) se trouvant sur les bras de ressort (15a, 15b) de la pince de fixation (3) se trouvent dans le corps de réception (5) pour la pince de fixation (3), sur une / la paroi frontale (29) de la partie d'accouplement (2) tournée vers la direction d'insertion (SR) de la partie de fiche (S).

16. Partie d'accouplement (2) selon la revendication 15,
**caractérisée en ce qu'**un contour de commande est à chaque fois réalisé dans les fentes de guidage (24), par le biais duquel, en coopération avec les tourillons de guidage complémentaires (23), d'une part un mouvement d'insertion et un mouvement d'extraction de la pince de fixation (3) transversalement à la direction d'enfichage (SR) de la partie de fiche (S) sont limités, et d'autre part, lors d'un déplacement de la pince de fixation (3) transversalement à la direction d'enfichage (SR) de la partie de fiche (S), il est produit un déplacement radial vers l'extérieur ou un déplacement radial vers l'intérieur des bras de ressort (15a, 15b) au niveau desquels se trouvent les tourillons de guidage (23).

17. Partie d'accouplement (2) selon l'une quelconque des revendications 1 à 16,
**caractérisée en ce que** des moyens pour empêcher un basculement (55, 56, 43) sont disposés au niveau du corps de base (4) et/ou au niveau du corps de réception (5), par exemple au niveau de ses bras d'encliquetage (51), afin de limiter un basculement du corps de base (4) par rapport au corps de réception (5).

18. Raccord enfichable (1) pour la fabrication de raccords de tuyaux et/ou de tubes, comprenant une partie d'accouplement (2), comprenant un corps de base (4) réalisé sous forme de partie de manchon, présentant un canal d'enfichage orienté axialement (100a) pour une partie de fiche (S) et un corps de réception (5) présentant également un canal d'enfichage orienté axialement (100b) pour la partie de fiche (S), pour une partie de fixation (3) qui sert à la fixation de la partie de fiche (S), la partie de fixation (3) pouvant être montée dans le corps de réception (5), le corps de réception (5) présentant une pièce de raccordement (6) pouvant être enfichée dans le canal d'enfichage orienté axialement (100a) du corps de base (4) et le corps de base (4) et le corps de réception (5) étant raccordés l'un à l'autre dans l'état de montage par le biais d'un raccord par encliquetage qui est formé d'une part par des éléments d'encliquetage (52) orientés vers l'extérieur, associés au corps de réception (5) et d'autre part par des éléments d'encliquetage (41) du corps de base (4) réalisés de manière complémentaire en vue d'un engagement mutuel, des bras d'encliquetage (51) orientés axialement, radialement élastiques à ressort, faisant saillie librement, étant réalisés au niveau de la pièce de raccordement (6) du corps de réception (5) pouvant être enfichée dans le corps de base (4), lesquels portent les éléments d'encliquetage (52) du corps de réception (5) orientés radialement vers l'extérieur, et des nervures de support (53) étant situées sur le côté extérieur des bras d'encliquetage (51), leur hauteur radiale étant petite par rapport à la dimension radiale des éléments d'encliquetage (52).

19. Raccord enfichable (1) selon la revendication 18,
**caractérisé en ce que** la partie de fixation (3) est réalisée d'une seule pièce, en particulier sous forme de pièce moulée par injection constituée de plastique.

20. Raccord enfichable (1) selon la revendication 18 ou 19,
**caractérisé par** les caractéristiques de la partie caractérisante d'une ou plusieurs des revendications 2 à 17.

21. Raccord enfichable (1) selon l'une quelconque des revendications 18 à 20,
**caractérisé en ce que** la partie de fixation (3) est réalisée sous forme de pince de fixation (3) réalisée en forme de U dans sa configuration de base, vu dans la direction de l'axe longitudinal (X-X), les branches du U constituant des bras de ressort (15a, 15b, 16a, 16b) et une surface d'actionnement (20) pour la pince de fixation (3) étant réalisée par une région de connexion (19) des branches du U sur le côté opposé aux extrémités libres des bras de ressort (15a, 15b, 16a, 16b).

22. Raccord enfichable (1) selon l'une quelconque des revendications 18 à 21,
**caractérisé en ce que** dans la partie d'accouplement (2), en particulier dans son corps de base (4), est disposé un ensemble d'étanchéité (11) qui comprend de préférence deux bagues d'étanchéité (12), en particulier des joints toriques élastomères, et une bague d'espacement (13) disposée entre elles, ainsi que notamment une bague de support supplémentaire (113).
